# EUROPÄISCHE PATENTSCHRIFT

(11) **EP 3 231 688 B1**
(45) Veröffentlichungstag und Bekanntmachung des Hinweises auf die Patenterteilung: **10.07.2019**
(21) Anmeldenummer: 17160080.2
(22) Anmeldetag: 09.03.2017
(51) Int. Cl.: B62D 11/00, B62D 11/20

(54) **LANDWIRTSCHAFTLICHES FAHRZEUG**
AGRICULTURAL VEHICLE
VÉHICULE AGRICOLE

(30) Priorität: 13.04.2016 DE 102016106788
(43) Veröffentlichungstag der Anmeldung: 18.10.2017
(73) Patentinhaber: CLAAS Industrietechnik GmbH, 33106 Paderborn (DE)
(72) Erfinder: Obermeier-Hartmann, Robert, 33142 Büren (DE); Wieckhorst, Jan Carsten, 33098 Paderborn (DE); Fedde, Thomas, 33129 Delbrück (DE); Schulze Zumkley, Hendril, 33397 Rietberg (DE); Schulte, Thomas, 33129 Delbrück (DE)
(74) Vertreter: CLAAS Gruppe

(56) Entgegenhaltungen:
- WO-A2-2008/042244
- US-A1- 2002 005 303
- US-A1- 2002 014 060
- US-A1- 2013 158 802

## Beschreibung

Die vorliegende Erfindung betrifft ein landwirtschaftliches Fahrzeug gemäß dem Oberbegriff des Anspruches 1. Weiterhin betrifft die Erfindung ein Verfahren zum Betreiben eines landwirtschaftlichen Fahrzeugs gemäß dem Oberbegriff des Anspruches 15.

Landwirtschaftliche Fahrzeuge, insbesondere Traktoren, umfassend zumindest zwei angetriebene Raupenlaufwerke, die mittels einer Steuerungseinrichtung hinsichtlich ihres Fahr- und Lenkverhaltens ansteuerbar sind, werden üblicherweise durch Differentiallenkgetriebe oder durch unabhängig voneinander angetriebene Raupen gelenkt. Differentialgetriebe werden durch eine sogenannte Steer-by-Wire-Einrichtung angesteuert. Hierbei übermittelt ein Sensor eine Betätigung eines Lenkrades repräsentierende Signale an die Steer-by-Wire-Einrichtung, welche diese Signale in eine Drehzahldifferenz zwischen den angetriebenen Raupenlaufwerken umrechnet, mit der diese angetrieben werden.

Für eine Bedienperson eines solchen landwirtschaftlichen Fahrzeugs kann sich insbesondere bei einem Übergang von einem Fahrzeugstillstand in den Fahrzustand eine überraschende Situation einstellen, da das mit Voll- oder Halbraupen ausgeführte Fahrzeug anders reagiert, als ein Radfahrzeug. Das Radfahrzeug zeigt der Bedienperson durch den Radeinschlag der lenkbaren Räder an, welcher Kurvenradius bei dem Übergang von dem Fahrzeugstillstand in den Fahrzustand zu erwarten ist. Hingegen lenkt das mit zumindest zwei angetriebenen Raupen ausgestattete Fahrzeug bei einem entsprechenden Lenkausschlag bereits im Stand, so dass es sich auf der Stelle um seine Hochachse dreht.

Aus der DE 600 30 235 T2 ist ein landwirtschaftliches Fahrzeug der eingangs genannten Art bekannt. Das Raupenfahrzeug weist ein Steuersystem auf, welches eine hydraulische Lenkpumpe ansteuert. Die Lenkpumpe spricht auf Lenkpumpensteuersignale an. Die Lenkpumpensignale werden aufgrund von Lenkpumpenbefehlssignalen generiert, welche von einer Bedienungsperson durch eine Betätigung eines Lenkrades erzeugt werden. Ein Lenkmotor stellt eine Eingangshöhe an einen differentiellen Raupenantriebsmechanismus bereit, der auf die Betätigung des Lenkrads reagiert und linke und rechte Laufbahnen antreibt und das Fahrzeug mit Wenderaten wendet, die von der Höhe der Lenkpumpensteuersignale abhängen. Um zu vermeiden, dass das Fahrzeug nach längerer Stillstandzeit bei Übergang in den Fahrzustand bei starker Beschleunigung durch die Bedienperson aufgrund der Unkenntnis des Lenkausschlages statt geradeaus zu fahren beginnt um die Hochachse zu drehen, reduziert das Steuersystem allmählich die Höhe der Lenkpumpensteuersignale, wenn das Fahrzeug stationär ist, die Kupplung eingerückt ist und diese Bedingungen für mindestens eine bestimmte Zeitspanne anhalten. Dabei reduziert das Steuersystem die Höhe weiter und schneller, wenn der Fahrzeugsitz nicht belegt ist. Das Steuersystem überwacht aktiv die Betriebsbedingungen bei einem Übergang vom Fahrzustand in den Fahrzeugstillstand, um eine für die Bedienperson unvorteilhafte Anfahrsituation zu vermeiden, indem sukzessive ein etwaiger Lenkeinschlag zurückgesetzt wird, so dass bei einem Übergang von dem Fahrzeugstillstand in den Fahrzustand stets gewährleistet ist, dass das Fahrzeug geradeaus fährt. Eine solches System ist aus US 2013/158802 A1 bzw. WO 2008/042244 A2 bei einem bauwirtschaftlichen Fahrzeug bekannt. US 2013/158802 A1 bzw. WO 2008/042244 A2 offenbaren somit den nächstliegenden Stand der Technik.

Aufgabe der vorliegenden Erfindung ist es, ein landwirtschaftliches Fahrzeug sowie ein Verfahren zum Betreiben des landwirtschaftlichen Fahrzeugs der eingangs genannten Art bereitzustellen, welches sich durch einen für eine Bedienperson erhöhten Fahrkomfort auszeichnet.

Diese Aufgabe wird hinsichtlich des Fahrzeugs durch die Merkmale des Anspruches 1 sowie durch ein Verfahren gemäß den Merkmalen des Anspruches 15 gelöst.

Vorteilhafte Weiterbildungen sind Gegenstand der Unteransprüche.

Gemäß Anspruch 1 wird ein landwirtschaftliches Fahrzeug, insbesondere Traktor, vorgeschlagen, umfassend zumindest zwei angetriebene Raupenlaufwerke, die mittels einer Steuerungseinrichtung hinsichtlich ihres Fahr- und Lenkverhaltens ansteuerbar sind, wobei von einer Lenkvorrichtung aufgrund eines Lenkeinschlages generierte Impulse von der Steuerungseinrichtung zur Ansteuerung der angetriebenen Raupenlaufwerke in einer den Lenkeinschlag repräsentierenden Weise umrechenbar sind, welches dadurch gekennzeichnet ist, dass die Steuerungseinrichtung dazu eingerichtet ist, das Fahrzeug in wenigstens einem ersten Fahrmodus und einem zweiten Fahrmodus zu betreiben, wobei in dem ersten Fahrmodus das Fahr- und Lenkverhalten im Wesentlichen dem eines Radfahrzeuges entspricht und in dem zweiten Fahrmodus das Fahr- und Lenkverhalten im Wesentlichen dem eines Vollraupenfahrzeuges entspricht. Die Bereitstellung zweier Fahrmodi, des ersten Fahrmodus', in welchem sich das Fahrzeug wie ein Radfahrzeug verhält, und des zweiten Fahrmodus', in welchem sich das Fahrzeug wie ein Vollraupenfahrzeug verhält, hat für eine Bedienperson den Vorteil, dass diese das Fahrverhalten des Fahrzeugs gezielt beeinflussen kann und vor einem etwaigen überraschenden Fahrverhalten des Fahrzeugs in Unkenntnis eines bereits bestehenden Lenkeinschlages oder eines getätigten Lenkeinschlages bewahrt wird. Die Größenordnung des Lenkeinschlages kann dabei auch Null betragen, was einer Geradeausfahrt entspräche. Die Steuerungseinrichtung kann dazu eingerichtet sein, den aktuell anliegenden Fahrmodus der Bedienperson zu signalisieren. Somit kann die Bedienperson beispielsweise aktiv entscheiden, ob sie den aktuell anliegenden Fahrmodus beibehalten oder wechseln will. Der Betrieb des Fahrzeugs in dem ersten Fahrmodus hat darüber hinaus den Vorteil, dass die Gefahr von Erdanhäufungen bei Kurvenfahrten des landwirtschaftlichen Fahrzeugs, insbesondere eines Traktors in der Ausführung als Zweiraupenfahrzeug, deutlich verringert werden kann.

Nach der Erfindung ist die Steuerungseinrichtung dazu eingerichtet sein, in Abhängigkeit von dem gewählten Fahrmodus einen Lenkeinschlag wiederzugeben. Die Bedienperson kann sich anhand eines von der Steuerungseinrichtung wiedergegebenen Lenkeinschlags auf das Verhalten des Fahrzeugs in dem jeweiligen Fahrmodus einstellen, was insbesondere bei einem Übergang von einem Fahrzeugstillstand in den Fahrzustand nach einer längeren Stillstandzeit vorteilhaft ist. Somit kann die Bedienperson erkennen, ob überhaupt ein Lenkeinschlag vorliegt und wie dieser sich in Abhängigkeit von dem eingestellten Fahrmodus auswirkt. Die Auswahlmöglichkeit und Wiedergabe des gewählten Fahrmodus kann der Bedienperson das Fahrgefühl eines Radfahrzeuges vermitteln.

Dabei kann ein Lenkeinschlag durch wenigstens eine von der Steuerungseinrichtung ansteuerbare Anzeigeeinrichtung visualisierbar sein. Mittels der wenigstens einen Anzeigeeinrichtung kann der Lenkeinschlag sowie dessen Größenordnung einer Bedienperson zur Ansicht gebracht werden. Insbesondere kann die Bedienperson erkennen, wie sich das Fahrzeug in Abhängigkeit von dem eingestellten Fahrmodus verhalten wird. Eine nur temporäre Visualisierung kann ausreichend sein, um der Bedienperson bei einem Übergang von einem Fahrzeugstillstand in den Fahrzustand eine Orientierung hinsichtlich des aus dem Fahrmodus resultierenden Fahrverhaltens zu geben. Denkbar ist auch eine permanente Visualisierung während des Betriebes des Fahrzeuges. Durch diese Lenkstrategie und Bedienoberfläche wird dem Fahrer das Fahrgefühl eines Radfahrzeugs vermittelt.

Hierzu kann ein Lenkeinschlag durch die Darstellung virtueller Räder visualisierbar sein. Die Darstellung des jeweiligen Lenkeinschlages mittels virtueller Räder hat den Vorteil, dass die Bedienperson unmittelbar Kenntnis erlangt, wie sich das Fahrzeug bei einem Lenkeinschlag verhalten wird. Darüber hinaus kann der Bedienperson auf diese Weise der aktuell eingestellte Fahrmodus zur Kenntnis gebracht werden. Die Darstellung virtueller Räder kann zugleich den ersten Fahrmodus symbolisieren, ohne dass es weiterer Anzeigemittel bedarf. Zu diesem Zweck kann die wenigstens eine Anzeigeeinrichtung als ein Bildschirm ausgeführt sein. Anstelle der Darstellung von virtuellen Rädern sind auch andere Formen der Darstellung auf der Anzeigevorrichtung denkbar, um den Lenkeinschlag und den daraus resultierenden Lenkwinkel darzustellen.

Alternativ oder zusätzlich kann ein Fahrverhalten aufgrund eines Lenkeinschlags und/oder einer Beschleunigung des Fahrzeugs mittels der Darstellung wenigstens einer virtuellen Fahrspur visualisierbar sein. So kann eine Visualisierung nur einer virtuellen Fahrspur erfolgen, welche lediglich das Fahrverhalten aufgrund eines Lenkeinschlages repräsentiert. Dies ist im Fall des zweiten Fahrmodus' gegeben, da es hierbei bereits bei einem Einschlagen des Lenkrades ohne gleichzeitiges Beschleunigen zu einer Drehung des Fahrzeugs um seine Hochachse kommt. Befindet sich das Fahrzeug im ersten Fahrmodus, so kann mittels der Darstellung wenigstens einer virtuellen Fahrspur das Fahrverhalten des Fahrzeugs in Folge einer Beschleunigung ohne oder mit einem Lenkeinschlag visualisiert werden.

Insbesondere kann die Visualisierung als eine Projektion auf eine Frontscheibe des Fahrzeugs oder auf einem Bildschirm im Inneren der Kabine des Fahrzeugs erfolgen. Bei dem Bildschirm kann es sich beispielsweise um ein in einer Kabine des Fahrzeugs bereits angeordnetes Display einer Bedien- und Steuereinheit des Fahrzeugs oder ein zusätzliches Display handeln, welches von der Steuerungseinrichtung ansteuerbar ist. Die Ausführung der Anzeigeeinrichtung als Projektion auf die Frontscheibe, als so genanntes Head-up-Display, hat den Vorteil, dass die Bedienperson ihre Kopfhaltung beziehungsweise Blickrichtung beibehalten kann, weil die Informationen in das Sichtfeld der Bedienperson projiziert werden.

Des Weiteren kann der Lenkeinschlag durch wenigstens eine an dem Fahrzeug angeordnete mechanische Anzeigeeinrichtung darstellbar sein, die durch die Steuerungseinrichtung ansteuerbar ist. Die wenigstens eine mechanische Anzeigeeinrichtung steht stellvertretend für imaginäre Räder, welche durch einen Lenkeinschlag in der Weise verstellbar sind, dass diese mechanische Anzeigeeinrichtung das infolge des Lenkeinschlages zu erwartende Fahrverhalten des Fahrzeuges wiedergibt. Bei der wenigstens einen mechanischen Anzeigeeinrichtung kann es sich um richtungsweisende Hilfsmittel, wie beispielsweise Peilstäbe, Wimpel, Fahnen oder dergleichen, handeln, welche im vorderen Bereich des Fahrzeugs im Sichtfeld der Bedienperson angeordnet sind. Hierzu kann die wenigstens eine mechanische Anzeigeeinrichtung durch einen oder mehrere Aktoren um eine vertikale Achse verschwenkbar sein. Der Aktor oder die Aktoren werden hierzu von der Steuerungseinrichtung angesteuert. Die Ansteuerung des Aktors oder der Aktoren erfolgt in Abhängigkeit vom Fahrmodus. Die Schwenkwinkel unterscheiden sich in Abhängigkeit vom jeweiligen Fahrmodus. So kann im ersten Fahrmodus der maximale Schwenkwinkel, der mittels des Aktors ansteuerbar ist, zwischen -60° und 60° bezogen auf die Fahrzeuglängsachse betragen. Hingegen kann der maximale Schwenkwinkel im zweiten Fahrmodus zwischen -90° und 90° betragen, da bei entsprechend em Lenkeinschlag im zweiten Fahrmodus das Drehen um die Hochachse im Stand des Fahrzeugs möglich ist.

In bevorzugter Weiterbildung kann vorgesehen sein, dass ein Verhältnis des wiederzugebenden Lenkeinschlags zu dem erfassten Lenkeinschlag des Lenkrades einstellbar ist. Die Einstellbarkeit des Verhältnisses erlaubt es der Bedienperson innerhalb definierter Grenzen bereits geringe Lenkeinschläge stärker zu visualisieren.

Bevorzugt kann bei einem Betrieb des Fahrzeugs in dem ersten Fahrmodus ein von der Steuerungseinrichtung ansteuerbarer Mindestkurvenradius dem eines Radfahrzeuges mit einem Radstand entsprechen, der dem Radstand der virtuellen Räder entspricht. Hierzu können die Kurvenradien mittels der Steuerungseinrichtung mathematisch herleitbar sein.

Vorteilhafterweise kann die Steuerungseinrichtung dazu eingerichtet sein, dass Lenkverhalten in Abhängigkeit von zumindest einem Betriebsparameter des Fahrzeugs und dem gewählten Fahrmodus anzusteuern. Als Betriebsparameter sollte die Fahrgeschwindigkeit Eingang finden, da ein Lenkeinschlag im ersten Fahrmodus bei gleichzeitigem Stillstand des Fahrzeugs nicht zu einem Drehen um dessen Hochachse führen soll.

Vorzugsweise kann die Steuerungseinrichtung dazu eingerichtet sein, dass ein Fahrmodus manuell auswählbar ist. Hierzu kann die Steuerungseinrichtung mit einer in der Kabine angeordneten Eingabevorrichtung steuerungstechnisch verbunden sein, mittels der von der Bedienperson zwischen den beiden Fahrmodi hin und her geschaltet werden kann.

Bevorzugt kann die Steuerungseinrichtung dazu eingerichtet sein, bei einem Übergang in einen dem Stillstand des Fahrzeugs entsprechenden Fahrzustand automatisch in den ersten Fahrmodus zu wechseln. Als Fahrzeugstillstand kommen beispielsweise das Reduzieren der Fahrgeschwindigkeit auf null, insbesondere über einen definierbaren Zeitraum hinaus, oder das Abschalten des Antriebes des Fahrzeugs in Betracht. Auf diese Weise kann verhindert werden, dass die Bedienperson von einem nicht erwarteten Fahrverhalten überrascht wird.

Insbesondere kann die Steuerungseinrichtung dazu eingerichtet sein, die Raupenlaufwerke mittels eines Differentiallenkgetriebes anzusteuern. Die Steuerungseinrichtung steuert das Differentiallenkgetriebe in der Weise an, so dass das Fahrzeug entsprechend des Lenkeinschlages der imaginären oder virtuellen Räder Kurvenradien beschreibt, die dem Fahrverhalten eines Radfahrzeuges entsprechen.

Alternativ kann die Steuerungseinrichtung dazu eingerichtet sein, die Raupenlaufwerke unabhängig voneinander anzusteuern. Auch in diesem Fall sorgt die Steuerungseinrichtung dafür, dass in dem ersten Fahrmodus das Fahrzeug ein Fahrverhalten an den Tag legt, welches dem eines Radfahrzeuges entspricht.

Gemäß Anspruch 15 wird ein Verfahren zum Betreiben eines landwirtschaftlichen Fahrzeugs vorgeschlagen, welches zumindest zwei angetriebene Raupenlaufwerke, die mittels einer Steuerungseinrichtung hinsichtlich ihres Fahr- und Lenkverhaltens angesteuert werden, umfasst, wobei von einer Lenkvorrichtung aufgrund eines Lenkeinschlages generierte Impulse von der Steuerungseinrichtung zur Ansteuerung der angetriebenen Raupenlaufwerke in einer den Lenkeinschlag repräsentierenden Weise umgerechnet werden. Das Verfahren ist dadurch gekennzeichnet, dass wobei in dem ersten Fahrmodus das Fahrzeug dem Fahr- und Lenkverhalten im Wesentlichen eines Radfahrzeuges entsprechend angesteuert wird und in dem zweiten Fahrmodus das Fahrzeug dem Fahr- und Lenkverhalten im Wesentlichen eines Vollraupenfahrzeuges entsprechend angesteuert wird. Mittels des Verfahrens ist ein an das Fahrverhalten von reinen Radfahrzeugen angenähertes Fahrverhalten von Raupenfahrzeugen erreichbar, wodurch eine erhöhte Benutzerfreundlichkeit erreicht werden kann.

Die vorliegende Erfindung wird nachstehend anhand von in den Zeichnungen dargestellten Ausführungsbeispielen näher erläutert.

Es zeigen:
- Fig. 1: eine schematische Darstellung eines landwirtschaftlichen Fahrzeugs in einer Ansicht von oben;
- Fig. 2: eine schematische Darstellung des landwirtschaftlichen Fahrzeugs in einer Seitenansicht;
- Fig. 3: eine schematische Innenansicht einer Kabine des landwirtschaftlichen Fahrzeugs gemäß Fig. 1;
- Fig. 4: eine Anzeigevorrichtung, welche das Fahrzeug in einem ersten Fahrmodus visualisiert;
- Fig. 5: eine Anzeigevorrichtung, welche das Fahrzeug in einem zweiten Fahrmodus visualisiert.

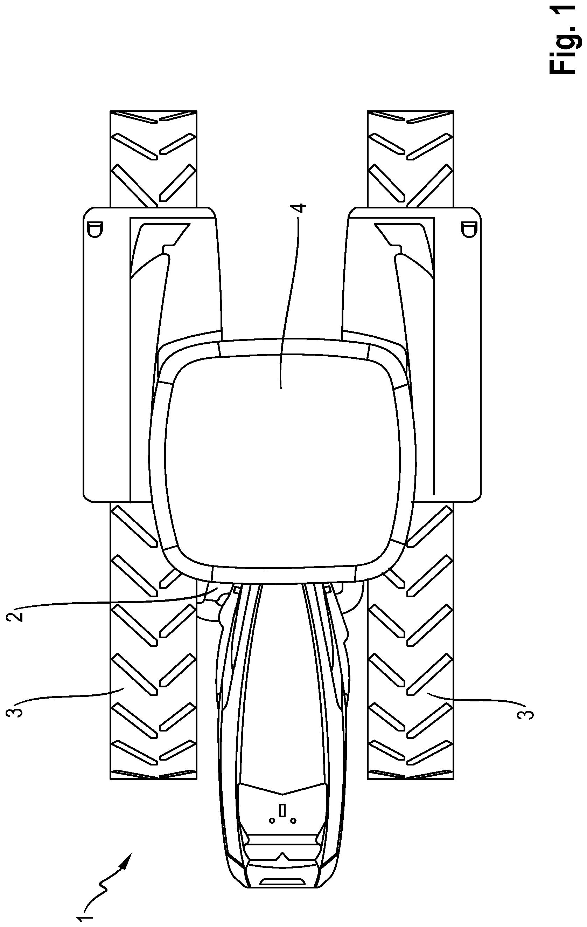

Die Darstellung in Fig. 1 zeigt eine schematische Darstellung eines als Traktor 1 ausgeführten landwirtschaftlichen Fahrzeugs in einer Ansicht von oben. Der Traktor 1 ist in Vollraupenbauweise konzipiert und weist eine Fahrzeugstruktur in Form eines Fahrzeugrahmens 2 auf. An den Fahrzeugrahmen 2 ist in Bezug auf die Fahrzeuglängsachse beidseitig, das heißt links- und rechtsseitig des Fahrzeugrahmens 2, jeweils ein Raupenlaufwerk 3 angebaut, wobei sich der Traktor 1 ausschließlich über die beiden Raupenlaufwerke 3 gegenüber dem Boden abstützt. Zur Durchführung bestimmungsgemäßer Arbeiten, wie beispielsweise Zugarbeit, ist der Traktor 1 auf für sich bekannte und daher hier nicht näher gezeigte Weise mit wenigstens einer geeigneten Kupplungseinrichtung ausgestattet, so dass sich mit dem Traktor 1 ein Arbeitsgerät (beispielsweise ein Bodenbearbeitungsgerät wie ein Pflug) ziehen lässt. Das jeweilige Raupenlaufwerk 3 des Traktors 1 weist einen Laufwerkkörper auf. Der Laufwerkskörper ist starr mit dem Fahrzeugrahmen 2 verbunden, beispielsweise durch eine Flanschverbindung. Der Antrieb des als Vollraupenfahrzeug ausgebildeten Traktors 1 erfolgt mittels eines Differentiallenkgetriebes oder mittels eines hydrostatischen Fahrantriebes, wobei jedem Raupenlaufwerk 3 eine separat ansteuerbare Hydropumpe zugeordnet ist.

Die Ansteuerung des Differentiallenkgetriebes oder des hydrostatischen Fahrantriebs erfolgt durch eine sogenannte Steer-by-Wire-Einrichtung. Eine Bedienperson des Traktors 1 erzeugt durch die Betätigung einer Lenkvorrichtung Steuerimpulse, welche von der Steer-by-Wire-Einrichtung in eine Drehzahldifferenz für den Antrieb der rechts- und linksseitigen Raupenlaufwerke 3 umgerechnet werden. Die Verwendung von Raupenlaufwerken 3 anstelle von Rädern führt zu einem veränderten Lenk- und Fahrverhalten des Traktors 1. Bei laufendem Antriebsaggregat des Traktors 1 reagiert der als Vollraupenfahrzeug ausgebildete Traktor 1 bereits auf einen Lenkausschlag durch die Betätigung der Lenkvorrichtung bekanntermaßen mit einer Drehung um seine Hochachse im Stand. Diese Reaktion des Traktors 1 kann für eine Bedienperson unerwartet auftreten, so dass es zu Unfällen kommen kann. Hingegen zeigt ein als Radfahrzeug ausgeführter Traktor durch den Radeinschlag infolge des Lenkausschlages an, welcher Kurvenradius bei einem Übergang vom Fahrzeugstillstand in den Fahrzustand zu erwarten ist.

Um den Bedienkomfort des als Vollraupenfahrzeug ausgeführten Traktors 1 zu verbessern, ist es vorgesehen, dass der Traktor 1 zur Steuerung und Regelung der Lenkung in zumindest zwei Fahrmodi betreibbar ist. Das Lenk- und Fahrverhalten entspricht in einem ersten Fahrmodus im Wesentlichen dem eines Radfahrzeuges. In einem zweiten Fahrmodus entspricht das Lenk- und Fahrverhalten im Wesentlichen dem eines Raupenfahrzeuges. Hierzu ist eine dem Traktor 1 zugeordnete Steuerungseinrichtung 5 vorgesehen, welche eine Auswahl des ersten Fahrmodus oder des zweiten Fahrmodus erlaubt. Dabei ist vorgesehen, dass die Fahrzeuggeschwindigkeit als Parameter für eine automatische Auswahl des ersten Fahrmodus berücksichtigt wird, so dass beispielsweise bei einem Lenkeinschlag im Stand keine Drehung des Traktors 1 um seine Hochachse erfolgt, wie es für Raupenfahrzeuge üblich ist. Darüber hinaus hat eine Bedienperson des Traktors 1 die Möglichkeit, einen Fahrmodus manuell auszuwählen. Da die Bedienperson den zweiten Fahrmodus, in dem das Fahr- und Lenkverhalten des Traktors 1 im Wesentlichen dem eines Vollraupenfahrzeuges entspricht, aktiv anwählen muss, weiß die Bedienperson im Vorfeld, welches Fahrverhalten zu erwarten ist und wird nicht von dem Fahr- und Lenkverhalten des Traktors 1 überrascht. Mittels dieser Lenkstrategie wird der Bedienperson das Fahrgefühl eines Radfahrzeugs vermittelt, was den Fahrkomfort erhöht. Zudem kann durch den Betrieb im ersten Fahrmodus auch die Gefahr von Erdanhäufungen bei Kurvenfahrten von Traktoren 1 in der Ausführung als Zweiraupenfahrzeug deutlich verringert werden.

Um der Bedienperson das Fahrverhalten aufgrund des gewählten Fahrmodus' transparent zu machen, ist die Steuerungseinrichtung 5 dazu eingerichtet, in Abhängigkeit von dem gewählten Fahrmodus den Lenkeinschlag wiederzugeben. Hierzu ist der Lenkeinschlag durch eine von der Steuerungseinrichtung 5 ansteuerbare Anzeigeeinrichtung 9 visualisierbar. Zu diesem Zweck wird der Bedienperson die Stellung imaginärer Räder eines Radfahrzeuges infolge eines Lenkeinschlages visualisiert. Bei einem Betrieb im ersten Fahrmodus steuert die Steuerungseinrichtung 5 die Steer-by-Wire-Einrichtung in der Weise an, dass durch eine entsprechende Ansteuerung des Differentiallenkgetriebes des Traktors 1 das Fahrverhalten eines Radfahrzeuges abgebildet wird. Der Traktor 1 beschreibt dabei Kurvenradien entsprechend des Lenkeinschlages der imaginären Räder. Diese Kurvenradien sind mathematisch einfach aus den Gleichungen von Ackermann herleitbar und werden durch geeignete Algorithmen von der Steuerungseinrichtung 5 berechnet. Für die Ansteuerung der Differentiallenkung muss die Fahrgeschwindigkeit des Traktors 1 zwingend in die Berechnung mit einbezogen werden, um zu vermeiden, dass der Traktor 1 nicht bereits im Stillstand um die Hochachse dreht, obwohl die Bedienperson durch Betätigung der Lenkvorrichtung bereits die imaginären Räder einschlägt. Die Steuerungseinrichtung 5 ist dazu eingerichtet, das Verhältnis des wiederzugebenden Lenkeinschlags zu dem erfassten Lenkeinschlag der Lenkvorrichtung innerhalb bestimmter Grenzen einstellen zu können.

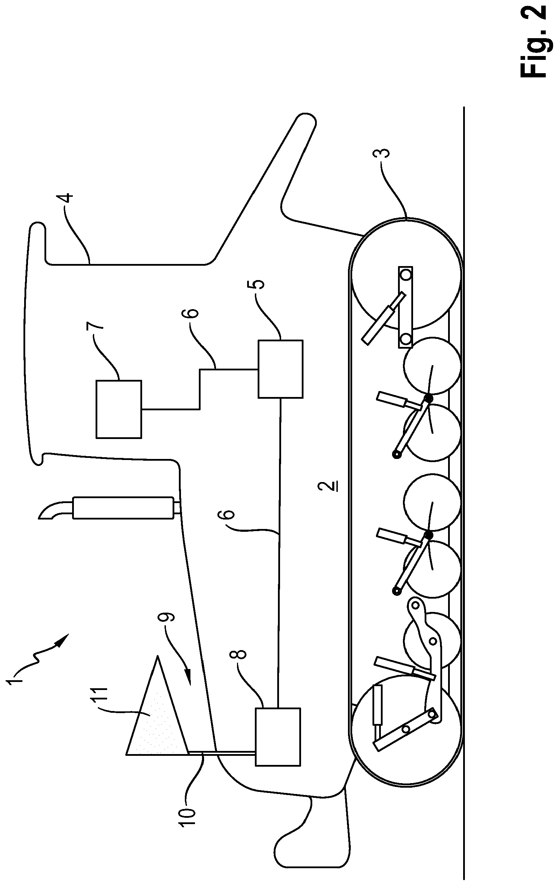

Nachfolgend wird die Visualisierung der mindestens zwei Fahrmodi umfassenden Lenkstrategie anhand von in den Fig. 2 bis 5 dargestellten Ausführungsbeispielen näher erläutert.

In Fig. 2 ist der Traktor 1 schematisch in einer Seitenansicht dargestellt. Der Traktor 1 umfasst eine Steuerungseinrichtung 5, welche durch eine Signal- und Steuerleitung 6 mit einem in der Kabine 4 angeordneten Bedienterminal 7, welches der Ein- und Ausgabe sowie Anzeige von Parametern dient, oder Bildschirm in Verbindung steht. Mittels einer weiteren Signal- und Steuerleitung 6 ist die Steuerungseinrichtung 5 mit zumindest einem Aktor 8 verbunden. Der Aktor 8 kann beispielsweise als ein Servomotor ausgeführt sein. Der Aktor 8 dient dem Antrieb wenigstens einer mechanischen Anzeigeeinrichtung 9 zur Visualisierung eines Lenkeinschlages, welches im Frontbereich des Traktors 1 angeordnet ist. Die Anordnung der mechanischen Anzeigeeinrichtung 9 am Traktor 1 ist derart gewählt, dass diese im Sichtfeld einer in der Kabine befindlichen Bedienperson liegt. Die wenigstens eine mechanische Anzeigeeinrichtung 9 umfasst eine Drehachse 10, an der ein Anzeigemittel 11, beispielsweise in Form eines Wimpels, angeordnet ist. Alternativ kann das Anzeigemittel 11 der mechanischen Anzeigeeinrichtung 9 als Peilstab, Richtungspfeil oder Fahne ausgeführt sein. Bevorzugt ist eine paarweise Anordnung der mechanischen Anzeigeeinrichtung 9 vorgesehen, beispielsweise rechts- und linksseitig auf einer Motorhaube oder an der Kabine 4 des Traktors 1. Der Aktor 8 wird von der Steuerungseinrichtung 5 in Abhängigkeit von dem gewählten Fahrmodus angesteuert. Wird der Traktor 1 im ersten Fahrmodus betrieben, so orientiert sich der Betrag des Schwenkwinkels des Anzeigemittels 11 um die Drehachse 10 an dem maximalen Lenkwinkel eines vergleichbaren Radfahrzeugs. Eine zur Längsachse des Traktors 1 parallele Ausrichtung der Anzeigemittel 11 steht für eine Geradausfahrt, da kein Lenkeinschlag vorliegt. Ein um die vertikale Drehachse 10 erfolgtes Schwenken der Anzeigemittel 11 weist auf die Richtung und die Stärke des Lenkeinschlages hin.

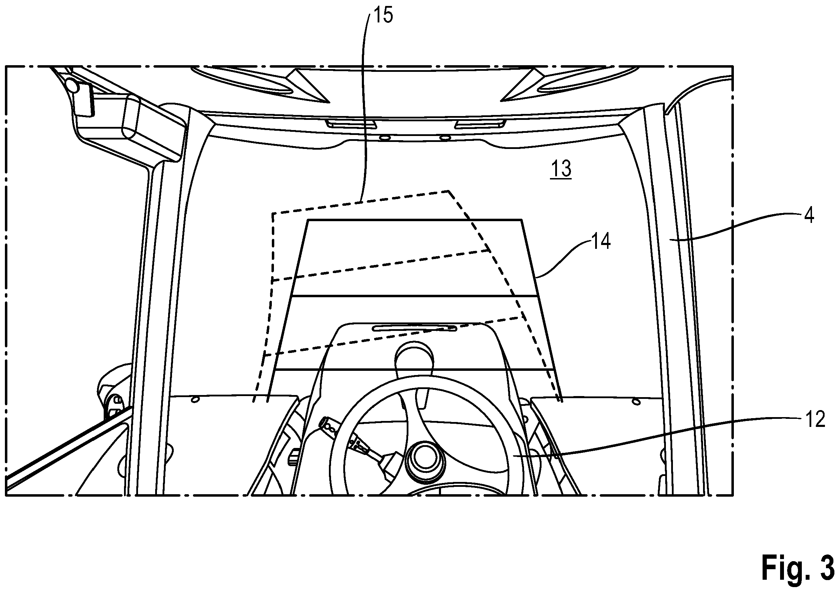

Die Darstellung in Fig. 3 zeigt eine schematische Innenansicht der Kabine 4 des landwirtschaftlichen Fahrzeugs gemäß Fig. 1. Zum Lenken des Traktors 1 ist eine Lenkvorrichtung 12 vorgesehen, welche im dargestellten Ausführungsbeispiel ein konventionelles Lenkrad ist. Alternativ kann die Lenkvorrichtung auch als Joystick ausgeführt sein. Wird die Steuerungseinrichtung 5 im ersten Fahrmodus, in dem das Fahr- und Lenkverhalten im Wesentlichen dem eines Radfahrzeuges entspricht, betrieben, erfolgt eine Projektion einer virtuellen Fahrspur 14, 15 auf eine Frontscheibe 13 der Kabine 4 im Sichtfeld der Bedienperson. Hierzu ist eine geeignete Projektionsvorrichtung in der Kabine 4 angeordnet, die entsprechende Steuersignale von der Steuerungseinrichtung 5 empfängt. Die virtuelle Fahrspur 14, 15 wird von der Steuerungseinrichtung 5 in Abhängigkeit von der Fahrgeschwindigkeit und dem Lenkeinschlag bestimmt. Die als Volllinie dargestellte virtuelle Fahrspur 14 stellt sich ein, wenn der Traktor 1 beschleunigt wird, ohne das es zu einer Betätigung der Lenkvorrichtung 12 kommt. Die strichliniert dargestellte virtuelle Fahrspur 15 resultiert aus dem Beschleunigen des Traktors 1 und einer zeitgleichen Betätigung der Lenkvorrichtung 12.

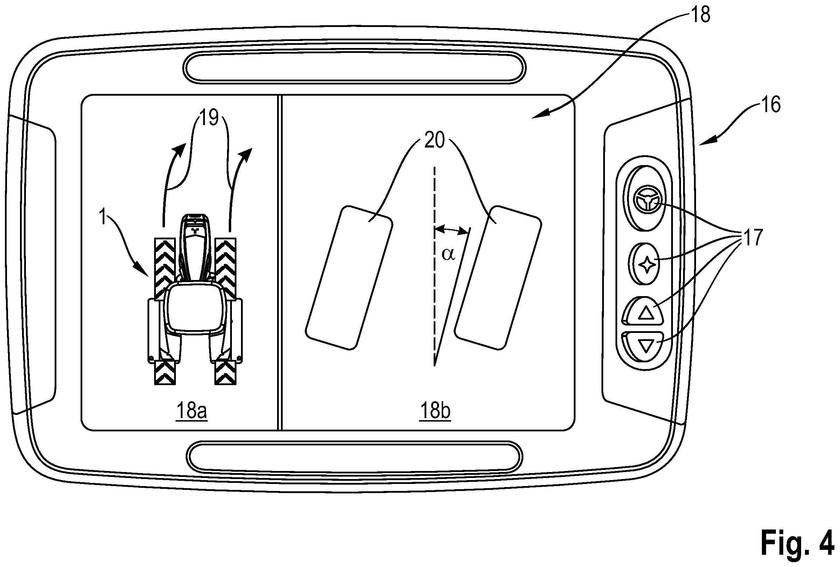

Fig. 4 zeigt eine als Bedienterminal 16 ausgeführte Anzeigeeinrichtung 9, welches in der Kabine des Traktors 1 angeordnet ist. Das Bedienterminal 16 umfasst einen, insbesondere integrierten, Bildschirm 18 sowie ein oder mehrere Bedienelemente 17. Der Bildschirm 18 kann derart ansteuerbar sein, dass dieser in zwei separate Bildschirmabschnitte 18a, 18b unterteilt ist. Auf diese Weise kann bei dem Betrieb im ersten Fahrmodus des Traktors 1 in dem einen Bildschirmabschnitt 18a der Traktor 1 sowie die aufgrund des Lenkeinschlages durch Betätigung der Lenkeinrichtung 12 sich einstellende Fahrtrichtung als Pfeile 19 angezeigt werden. Der andere Bildschirmabschnitt 18b zeigt virtuelle Räder 20 und deren Lenkwinkel α, der sich aus der Betätigung der Lenkvorrichtung 12 ergibt.

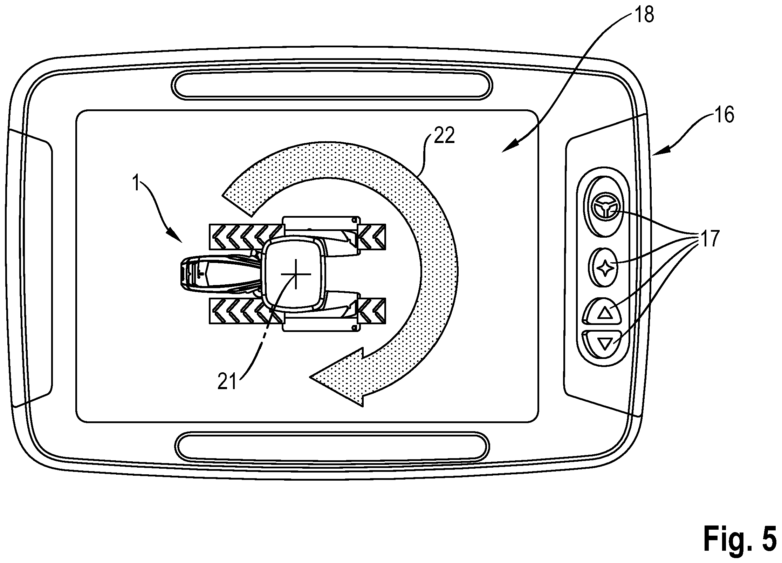

In Fig. 5 ist das Bedienterminal 16 dargestellt, welches eine Ansicht des Bildschirmes 18 zeigt, wenn der Traktor 1 in dem zweiten Fahrmodus betrieben wird. Auf dem Bildschirm 18 ist eine Draufsicht auf den Traktor 1 dargestellt. Mit dem Bezugszeichen 21 ist die Hochsachse des Traktors 1 bezeichnet, um welche sich der Traktor 1 im zweiten Fahrmodus drehen kann, wenn ein Lenkeinschlag durch die Betätigung der Lenkvorrichtung 12 vorliegt, jedoch der Traktor 1 nicht gleichzeitig beschleunigt wird. Pfeil 22 deutet die Drehung des Traktors 1 um die Hochachse 21 an.

Die Ansteuerung der Anzeigeeinrichtung 9 durch die Steuerungseinrichtung 5 zur Visualisierung des Lenk- und Fahrverhaltens des Traktors 1 kann zeitlich begrenzt erfolgen. Beispielsweise kann beim Starten des Traktors 1 automatisch in den ersten Fahrmodus gewechselt werden, so dass sichergestellt ist, dass der Bedienperson die aktuelle Lenksituation unmittelbar zur Kenntnis gebracht wird. Nachdem der Übergang vom Fahrzeugstillstand in den Fahrzustand erfolgt ist, kann die Visualisierung ausgeblendet beziehungsweise abgeschaltet werden. Bei einem Wechsel von dem ersten Fahrmodus in den zweiten Fahrmodus kann die Visualisierung automatisch aktiviert werden.

### Bezugszeichenliste

- 1: Traktor
- 2: Rahmen
- 3: Raupenlaufwerk
- 4: Kabine
- 5: Steuerungseinrichtung
- 6: Signal- und Steuerleitung
- 7: Bedienterminal
- 8: Aktor
- 9: Anzeigeeinrichtung
- 10: Drehachse
- 11: Anzeigemittel
- 12: Lenkvorrichtung
- 13: Frontscheibe
- 14: Virtuelle Fahrspur
- 15: Virtuelle Fahrspur
- 16: Bedienterminal
- 17: Bedienelement
- 18: Bildschirm
- 18a: Bildschirmabschnitt
- 18b: Bildschirmabschnitt
- 19: Pfeil
- 20: Virtuelles Rad
- 21: Hochachse des Traktors 1
- 22: Pfeil

- α: Lenkwinkel

## Patentansprüche

1. Landwirtschaftliches Fahrzeug (1), umfassend zumindest zwei angetriebene Raupenlaufwerke (3), die mittels einer Steuerungseinrichtung (5) hinsichtlich ihres Fahr- und Lenkverhaltens ansteuerbar sind, wobei von einer Lenkvorrichtung (12) aufgrund eines Lenkeinschlages generierte Impulse von der Steuerungseinrichtung (5) zur Ansteuerung der angetriebenen Raupenlaufwerke (5) in einer den Lenkeinschlag repräsentierenden Weise umrechenbar sind, **dadurch gekennzeichnet, dass** die Steuerungseinrichtung (5) dazu eingerichtet ist, das Fahrzeug (1) in wenigstens einem ersten Fahrmodus und einem zweiten Fahrmodus zu betreiben, wobei in dem ersten Fahrmodus das Fahr- und Lenkverhalten im Wesentlichen dem eines Radfahrzeuges entspricht und in dem zweiten Fahrmodus das Fahr- und Lenkverhalten im Wesentlichen dem eines Vollraupenfahrzeuges entspricht, wobei die Steuerungseinrichtung (5) dazu eingerichtet ist, in Abhängigkeit von dem gewählten Fahrmodus einen Lenkeinschlag wiederzugeben

2. Landwirtschaftliches Fahrzeug (1) nach Anspruch 1, **dadurch gekennzeichnet, dass** ein Lenkeinschlag durch eine von der Steuerungseinrichtung (5) ansteuerbare Anzeigeeinrichtung (9) visualisierbar ist.

3. Landwirtschaftliches Fahrzeug (1) nach Anspruch 1 oder 2, **dadurch gekennzeichnet, dass** ein Lenkeinschlag durch die Darstellung virtueller Räder (20) visualisierbar ist.

4. Landwirtschaftliches Fahrzeug (1) nach einem der Ansprüche 1 bis 3, **dadurch gekennzeichnet, dass** ein Fahrverhalten aufgrund eines Lenkeinschlags und/oder einer Beschleunigung des Fahrzeugs (1) mittels der Darstellung wenigstens einer virtuellen Fahrspur (14, 15) visualisierbar ist.

5. Landwirtschaftliches Fahrzeug (1) nach einem der Ansprüche 2 bis 4, **dadurch gekennzeichnet, dass** die Visualisierung als eine Projektion auf eine Frontscheibe (13) des Fahrzeugs (1) oder auf einem Bildschirm (7, 18) im Inneren der Kabine (4) des Fahrzeugs (1) erfolgt.

6. Landwirtschaftliches Fahrzeug (1) nach Anspruch 1, **dadurch gekennzeichnet, dass** der Lenkeinschlag durch wenigstens eine an dem Fahrzeug (1) angeordnete mechanische Anzeigeeinrichtung (9, 11) darstellbar ist, die durch die Steuerungseinrichtung (5) ansteuerbar ist.

7. Landwirtschaftliches Fahrzeug (1) nach einem der Ansprüche 1 bis 5, **dadurch gekennzeichnet, dass** ein Verhältnis des wiederzugebenden Lenkeinschlags zu dem erfassten Lenkeinschlag des Lenkrades einstellbar ist.

8. Landwirtschaftliches Fahrzeug (1) nach einem der Ansprüche 2 bis 6, **dadurch gekennzeichnet, dass** bei einem Betrieb des Fahrzeugs (1) in dem ersten Fahrmodus ein von der Steuerungseinrichtung (5) ansteuerbarer Mindestkurvenradius dem eines Radfahrzeuges mit einem Radstand entspricht, der dem Radstand der virtuellen Räder (20) entspricht.

9. Landwirtschaftliches Fahrzeug (1) nach einem der Ansprüche 1 bis 7, **dadurch gekennzeichnet, dass** die Steuerungseinrichtung (5) dazu eingerichtet ist, dass Lenkverhalten in Abhängigkeit von zumindest einem Betriebsparameter des Fahrzeugs (1) und dem gewählten Fahrmodus anzusteuern.

10. Landwirtschaftliches Fahrzeug (1) nach einem der Ansprüche 1 bis 9, **dadurch gekennzeichnet, dass** die Steuerungseinrichtung (5) dazu eingerichtet ist, dass ein Fahrmodus manuell auswählbar ist.

11. Landwirtschaftliches Fahrzeug (1) nach einem der Ansprüche 1 bis 9, **dadurch gekennzeichnet, dass** die Steuerungseinrichtung (5) dazu eingerichtet ist, bei einem Übergang in einen dem Stillstand des Fahrzeugs (1) entsprechenden Fahrzeugzustand automatisch in den ersten Fahrmodus zu wechseln.

12. Landwirtschaftliches Fahrzeug (1) nach einem der Ansprüche 1 bis 11, **dadurch gekennzeichnet, dass** die Steuerungseinrichtung (5) dazu eingerichtet ist, die Raupenlaufwerke (3) mittels eines Differentiallenkgetriebes anzusteuern.

13. Landwirtschaftliches Fahrzeug (1) nach einem der Ansprüche 1 bis 11, **dadurch gekennzeichnet, dass** die Steuerungseinrichtung (5) dazu eingerichtet ist, die Raupenlaufwerke (3) unabhängig voneinander anzusteuern.

14. Verfahren zum Betreiben eines landwirtschaftlichen Fahrzeugs (1), umfassend zumindest zwei angetriebene Raupenlaufwerke (3), die mittels einer Steuerungseinrichtung (5) hinsichtlich ihres Fahr- und Lenkverhaltens angesteuert werden, wobei von einer Lenkvorrichtung (12) aufgrund eines Lenkeinschlages generierte Impulse von der Steuerungseinrichtung (5) zur Ansteuerung der angetriebenen Raupenlaufwerke (3) in einer den Lenkeinschlag repräsentierenden Weise umgerechnet werden, **dadurch gekennzeichnet, dass** das Fahrzeug (1) in wenigstens einem ersten Fahrmodus und einem zweiten Fahrmodus betrieben wird, wobei in dem ersten Fahrmodus das Fahrzeug (1) dem Fahr- und Lenkverhalten im Wesentlichen eines Radfahrzeuges entsprechend angesteuert wird und in dem zweiten Fahrmodus das Fahrzeug (1) dem Fahr- und Lenkverhalten im Wesentlichen eines Vollraupenfahrzeuges entsprechend angesteuert wird, wobei die Steuerungseinrichtung (5) dazu eingerichtet ist, in Abhängigkeit von dem gewählten Fahrmodus einen Lenkeinschlag wiederzugeben

## Claims

1. An agricultural vehicle (1) including at least two driven track-laying units (3) actuable by means of a control device (5) in respect of their travel and steering behaviour, wherein pulses generated by a steering device (12) on the basis of a steering angle can be converted by the control device (5) for actuation of the driven track-laying units (3) in a manner representing the steering angle, **characterised in that** the control device (5) is adapted to operate the vehicle (1) in at least a first travel mode and a second travel mode, wherein in the first travel mode the travel and steering behaviour substantially corresponds to that of a wheeled vehicle and in the second travel mode the travel and steering behaviour substantially corresponds to that of a fully track-laying vehicle, wherein the control device (5) is adapted to reproduce a steering angle in dependence on the selected travel mode.

2. An agricultural vehicle (1) according to claim 1 **characterised in that** a steering angle can be visualised by a display device (9) actuable by the control device (5).

3. An agricultural vehicle (1) according to claim 1 or claim 2 **characterised in that** a steering angle can be visualised by the representation of virtual wheels (20).

4. An agricultural vehicle (1) according to one of claims 1 to 3 **characterised in that** a travel behaviour can be visualised on the basis of a steering angle and/or an acceleration of the vehicle (1) by means of the representation of at least one virtual travel path (14, 15).

5. An agricultural vehicle (1) according to one of claims 2 to 4 **characterised in that** the visualisation is in the form of a projection on to a windscreen (13) of the vehicle (1) or on a display screen (17, 18) in the interior of the cab (4) of the vehicle (1).

6. An agricultural vehicle (1) according to claim 1 **characterised in that** the steering angle can be represented by at least one mechanical display device (9, 11) which is arranged on the vehicle (1) and which is actuable by the control device (5).

7. An agricultural vehicle (1) according to one of claims 1 to 5 **characterised in that** a ratio of the steering angle to be reproduced to the detected steering angle of the steering wheel is adjustable.

8. An agricultural vehicle (1) according to one of claims 2 to 6 **characterised in that** in operation of the vehicle (1) in the first travel mode a minimum curve radius actuable by the control device (5) corresponds to that of a wheeled vehicle with a wheelbase which corresponds to the wheelbase of the virtual wheels (20).

9. An agricultural vehicle (1) according to one of claims 1 to 7 **characterised in that** the control device (5) is adapted to actuate the steering behaviour in dependence on at least one operating parameter of the vehicle (1) and the selected travel mode.

10. An agricultural vehicle (1) according to one of claims 1 to 9 **characterised in that** the control device (5) is adapted for a travel mode to be manually selectable.

11. An agricultural vehicle (1) according to one of claims 1 to 9 **characterised in that** the control device (5) is adapted automatically to change into the first travel mode in a transition to a vehicle state corresponding to the vehicle (1) being stopped.

12. An agricultural vehicle (1) according to one of claims 1 to 11 **characterised in that** the control device (5) is adapted to actuate the track-laying units (3) by means of a differential transmission.

13. An agricultural vehicle (1) according to one of claims 1 to 11 **characterised in that** the control device (5) is adapted to actuate the track-laying units (3) independently of each other.

14. A method of operating an agricultural vehicle (1) including at least two driven track-laying units (3) which are actuated by means of a control device (5) in respect of their travel and steering behaviour, wherein pulses generated by a steering device (12) on the basis of a steering angle are converted by the control device (5) for actuation of the driven track-laying units (3) in a manner representing the steering angle, **characterised in that** the vehicle (1) is operated in at least a first travel mode and a second travel mode, wherein in the first travel mode the vehicle (1) is actuated corresponding to the travel and steering behaviour substantially of a wheeled vehicle and in the second travel mode the vehicle (1) is actuated corresponding to the travel and steering behaviour substantially of a fully track-laying vehicle, wherein the control device (5) is adapted to reproduce a steering angle in dependence on the selected travel mode.

## Revendications

1. Véhicule agricole (1) comprenant au moins deux trains de roulement à chenilles entraînés (3) qui peuvent être commandés sur le plan de leur comportement de marche et de direction au moyen d'un équipement de commande (5), des impulsions générées par un dispositif directionnel (12) sur la base d'un braquage directionnel étant convertibles par l'équipement de commande (5) pour commander les trains de roulement à chenilles entraînés (5) d'une manière représentant le braquage directionnel, **caractérisé en ce que** l'équipement de commande (5) est agencé pour actionner le véhicule (1) dans au moins un premier mode de marche et un second mode de marche, dans le premier mode de marche le comportement de marche et de direction correspondant sensiblement à celui d'un véhicule à roues et, dans le second mode de marche, le comportement de marche et de direction correspondant sensiblement à celui d'un véhicule tout-chenillé, l'équipement de commande (5) étant agencé pour reproduire un braquage directionnel en fonction du mode de marche sélectionné.

2. Véhicule agricole (1) selon la revendication 1, **caractérisé en ce qu'**un braquage directionnel est visualisable par l'intermédiaire d'un équipement d'affichage (9) commandable par l'équipement de commande (5).

3. Véhicule agricole (1) selon la revendication 1 ou 2, **caractérisé en ce qu'**un braquage directionnel est visualisable par la représentation de roues virtuelles (20).

4. Véhicule agricole (1) selon une des revendications 1 à 3, **caractérisé en ce qu'**un comportement de marche est visualisable au moyen de la représentation d'au moins une trace de passage virtuelle (14, 15) sur la base d'un braquage directionnel et/ou d'une accélération du véhicule (1).

5. Véhicule agricole (1) selon une des revendications précédentes 2 à 4, **caractérisé en ce que** la visualisation s'effectue sous la forme d'une projection sur un pare-brise (13) du véhicule (1) ou sur un écran (7, 18) à l'intérieur de la cabine (4) du véhicule (1).

6. Véhicule agricole (1) selon la revendication 1, **caractérisé en ce que** le braquage directionnel est représenté par l'intermédiaire d'au moins un équipement d'affichage mécanique (9, 11) qui est disposé sur le véhicule (1) et qui est commandable par l'intermédiaire de l'équipement de commande (5) .

7. Véhicule agricole (1) selon une des revendications 1 à 5, **caractérisé en ce que** le rapport du braquage directionnel à reproduire au braquage directionnel détecté du volant est réglable.

8. Véhicule agricole (1) selon une des revendications 2 à 6, **caractérisé en ce que**, en cas de fonctionnement du véhicule (1) dans le premier mode de marche, un rayon de virage minimal commandable par l'équipement de commande (5) correspond à celui d'un véhicule à roues avec un empattement qui correspond à l'empattement des roues virtuelles (20).

9. Véhicule agricole (1) selon une des revendications 1 à 7, **caractérisé en ce que** l'équipement de commande (5) est agencé pour commander le comportement de direction en fonction d'au moins un paramètre de fonctionnement du véhicule (1) et du mode de marche sélectionné.

10. Véhicule agricole (1) selon une des revendications 1 à 9, **caractérisé en ce que** l'équipement de commande (5) est agencé de façon qu'un mode de marche puisse être sélectionné manuellement.

11. Véhicule agricole (1) selon une des revendications 1 à 9, **caractérisé en ce que** l'équipement de commande (5) est agencé pour basculer automatiquement dans le premier mode de marche en cas de passage dans un état de véhicule correspondant à l'arrêt du véhicule (1).

12. Véhicule agricole (1) selon une des revendications 1 à 11, **caractérisé en ce que** l'équipement de commande (5) est agencé pour commander les trains de roulement à chenilles (3) au moyen d'un mécanisme de direction différentiel.

13. Véhicule agricole (1) selon une des revendications 1 à 11, **caractérisé en ce que** l'équipement de commande (5) est agencé pour commander les trains de roulement à chenilles (3) indépendamment les uns des autres.

14. Procédé d'actionnement d'un véhicule agricole (1), comprenant au moins deux trains de roulement à chenilles entraînés (3) qui peuvent être commandés sur le plan de leur comportement de marche et de direction au moyen d'un équipement de commande (5), des impulsions générées par un dispositif directionnel (12) sur la base d'un braquage directionnel étant convertibles par l'équipement de commande (5) pour commander les trains de roulement à chenilles entraînés (3) d'une manière représentant le braquage directionnel, **caractérisé en ce que** le véhicule (1) est actionné dans au moins un premier mode de marche et un second mode de marche, dans le premier mode de marche le véhicule (1) étant actionné conformément au comportement de marche et de direction sensiblement d'un véhicule à roues et, dans le second mode de marche, le véhicule (1) étant actionné conformément au comportement de marche et de direction sensiblement d'un véhicule tout-chenillé, l'équipement de commande (5) étant agencé pour reproduire un braquage directionnel en fonction du mode de marche sélectionné.
